# EUROPÄISCHE PATENTSCHRIFT

(11) **EP 3 259 109 B1**
(45) Veröffentlichungstag und Bekanntmachung des Hinweises auf die Patenterteilung: **18.05.2022**
(21) Anmeldenummer: 16709682.5
(22) Anmeldetag: 16.02.2016
(51) Int. Cl.: B29C 48/27, B29C 48/50, B29C 48/692, B29C 48/693, B29B 7/58

(54) **FILTERVORRICHTUNG UND FILTRIERVERFAHREN**
FILTER DEVICE AND FILTER METHOD
DISPOSITIF ET PROCEDE DE FILTRATION

(30) Priorität: 19.02.2015 AT 501272015; 21.12.2015 DE 102015226348
(43) Veröffentlichungstag der Anmeldung: 27.12.2017
(73) Patentinhaber: Next Generation Analytics GmbH, 4710 Grieskirchen (AT)
(72) Erfinder: KASTNER, Friedrich, 4710 Grieskirchen (AT)
(74) Vertreter: Burger, Hannes
(86) Internationale Anmeldenummer: PCT/AT2016/050029
(87) Internationale Veröffentlichungsnummer: WO 2016/131071

(56) Entgegenhaltungen:
- WO-A1-02/00321
- WO-A1-2008/031127
- CN-A- 102 091 456
- DE-A1- 2 753 864
- DE-A1- 10 315 906
- DE-A1- 19 916 539
- DE-U1- 20 319 752
- JP-A- 2009 107 330
- US-A- 1 181 729
- US-A- 1 840 153
- US-A- 3 354 250
- US-A- 3 361 263
- US-A- 3 471 024
- US-A- 3 668 837
- US-A- 3 672 507
- US-A- 3 817 377
- US-A1- 2006 021 949
- US-A1- 2006 027 492

## Beschreibung

Die Erfindung betrifft eine Filtervorrichtung und ein Filterverfahren zum Filtern von viskosen Flüssigkeiten, insbesondere flüssigen Kunststoffen.

Zum Entfernen von Verunreinigungen, wie z.B. Metalle, Sande, Stäube oder Gelpartikel aus viskosen Flüssigkeiten, z.B. Kunststoffen in flüssiger Form, werden in der Regel Filter verwendet, womit mit dem Begriff "Filter" im Sinne der Erfindung auch Siebe umfasst sind.

Bei den bisher bekannten Verfahren werden die Flüssigkeiten durch einen Filter gepresst. Zur Reinigung des Filters werden diese oftmals ausgetauscht. Alternativ werden Filter auch mittels eines Schiebers gereinigt, wobei der Schieber über die Filteroberfläche geführt wird und dabei Verunreinigungen an den Rand schiebt, welche den Filter ansonsten verstopfen würden.

US3817377 beschreibt ein Verfahren und eine Vorrichtung zum Abtrennen von unerwünschtem Partikelmaterial aus einem fließfähigen Material, wie etwa heißem thermoplastischen Polymer, wobei ein Strom des fließfähigen Materials mit dem darin mitgeführten Partikelmaterial einem Körper zugeführt wird. Dieser enthält ein Filterelement, so dass das Partikelmaterial in Wirkkontakt mit dem Filterelement derart gebracht wird, dass die dabei auftretende Geschwindigkeit ausreicht, um das Partikelmaterial in der reduzierten Strömung gehalten wird, wenn das gefilterte Material aus dem Strom durch das Filterelement strömt.

US3354250A beschreibt ein Verfahren zur Herstellung künstlicher, fadenförmiger Produkte aus pulverförmigem, schmelzbarem Harzmaterial, umfassend kontinuierliches Zuführen des pulverförmigen Harzmaterials unter Druck in einem stetigen Strom von einer Zufuhrquelle in einen unversperrten Durchgang, der in einem wärmeleitenden Metallschmelzelement mit Öffnung endet, Ausüben eines stetigen Drucks auf das Harzmaterial in dem Durchgang, um das Harzmaterial in dem Durchgang gegen das Schmelzelement zu komprimieren, kontinuierliches Kühlen des Harzmaterials bis zum Eintritt des Materials in den Durchgang, kontinuierliches Erhitzen des Schmelzelements, um eine Schicht des Harzmaterials neben dem Schmelzelement flüssig zu machen, und kontinuierliches Drücken kleiner Ströme des flüssigen Materials durch die Öffnungen in dem Schmelzelement so schnell wie es aufgenommen wird.

US2006021949A1 beschreibt eine Vorrichtung zum Extrudieren einer Poly(arylenether)-Mischung umfassend einen kontinuierlichen Siebwechsler, der zwischen einer Düse und einem Extruder angeordnet ist. Der kontinuierliche Siebwechsler umfasst einen Extruderblock, einen Auslassblock, der in Fluidverbindung mit dem Extruderblock steht, eine Spule von Filtermitteln, die angeordnet ist, um den Durchgang des Siebes durch den Extruderblock und aus dem Auslassblock zu ermöglichen, und ein Mittel zur Steuerung des Siebvorschubs durch den Extruderblock und den Auslassblock.

DE2753864A1 beschreibt eine Druckfiltrationseinheit bestehend aus zwei flachen Platten, die durch Klemmen zusammengehalten werden. Diese dienen als Gehäuse für den Filter, wobei die Membran im Flansch gehalten wird. Oberhalb der Membran befindet sich eine Verteilerplatte mit einem Ringspalt um den äußeren Rand. Seine Oberseite neigt sich von der Mitte nach oben. Das Futter tritt oberhalb dieser Platte durch ein Loch ein, das um 45 Grad zur Mitte geneigt ist. Unterhalb der Membran weist die untere Platte eine Stützstruktur für die Membran auf.

Nachteil der bisher verwendeten Vorrichtungen und Verfahren ist, dass in der Regel ein großer Teil der Verunreinigungen mit der viskosen Flüssigkeit direkt oder durch den Filter durch den Filter gedrückt werden. Insbesondere werden Gelpartikel durch den Schieber zerkleinert und anschließend die Teile durch den Filter gedrückt.

Aufgabe der vorliegenden Erfindung war es, die Nachteile des Standes der Technik zu überwinden und eine Filtervorrichtung und ein Filterverfahren zur Verfügung zu stellen, mittels derer ein Benutzer in der Lage ist, eine verbesserte und vereinfachte Filterung viskoser Flüssigkeiten vorzunehmen.

Diese Aufgabe wird durch eine Filtervorrichtung und ein Filterverfahren gemäß den Ansprüchen gelöst.

Die erfindungsgemäße Filtervorrichtung umfasst einen Einlassraum, einen Auslassraum, und ein Filtersystem, welches Einlassraum und Auslassraum trennt, wobei der Einlassraum mindestens eine Flüssigkeitszuführung und mindestens einen Flüssigkeitsabfluss umfasst und der Auslassraum keine Flüssigkeitszuführung und mindestens einen Flüssigkeitsabfluss umfasst, wobei der Boden des Einlassraums zumindest teilweise durch das Filtersystem gebildet ist, dadurch gekennzeichnet, dass die Flüssigkeitszuführung zentral über dem Filtersystem oder an der Seite des Einlassraums angebracht ist, und über dem Filtersystem Strömungselemente angebracht sind, welche so gestaltet sind, dass eine Strömung unter oder über ihnen stattfinden kann und eine Wendel- oder Serpentinenform aufweisen und die Strömung der Flüssigkeit regeln, so dass sie nicht auf direktem Weg zum Flüssigkeitsauslass des Einlassraum fließt.

Gemäß einer besonderen Ausführungsform ist der Filter dermaßen angeordnet, dass die Anströmrichtung der Flüssigkeit relativ zur Flächennormalen des Filters in einem Winkel zwischen 10° und 90°, insbesondere zwischen 30° und 70°, verläuft. Der Filter steht also bevorzugt schräg zur anströmenden Flüssigkeit.

Das erfindungsgemäße Filterverfahren zum Filtern von viskosen Flüssigkeiten umfasst die Schritte:
- Anströmen der viskosen Flüssigkeit an ein Filtersystem, wobei der durch den Fluss der Flüssigkeit auf die Fläche des Filters ausgeübte Druck P(F) kleiner ist als der Druck des Flusses dieser Flüssigkeit auf eine Fläche orthogonal zur Strömungsrichtung der Flüssigkeit P(S), und insbesondere P(F)/P(S) < 90%, besonders bevorzugt P(F)/P(S) < 70%, gilt.
- Abführen der durch das Filtersystem hindurchgetretenen Flüssigkeit.
- Ab- oder Rückführen der nicht durch das Filtersystem hindurchgetretenen Flüssigkeit.

Selbstverständlich berücksichtigt P(F) auch den Druck der durch das Filtersystem hindurchtretenden Flüssigkeit, da die Formulierung "Fläche des Filters" nicht die Filterfläche (Löcher ausgenommen) umfasst sondern die gesamte Fläche, an der das Filtersystem angeordnet ist inclusive der Öffnungen des Filtersystems. Geeignet wäre auch hier die Bezeichnung "das das Filtersystem überdeckende geschlossene Flächenelement".

Der Einlassraum ist zunächst lediglich ein Raum, durch den die einlaufende Flüssigkeit strömt. Genauso ist ein Auslassraum lediglich ein Raum, durch den auslaufende Flüssigkeit strömt. Diese beiden Räume können je nach Anwendung besonders gestaltet sein, aber in einer einfachen Anwendung auch nur einem Abschnitt eines Rohres entsprechen. Im Folgenden wird auch der Begriff "Einlassbereich" verwendet. Dies ist der Bereich des Einlassraums, in dem die einströmende Flüssigkeit eintrifft und mit dem Filter in Kontakt kommt.

Notwendig ist für die Erfindung lediglich, dass Einlassraum und Auslassraum durch das Filtersystem getrennt ist, so dass Flüssigkeit nur durch das Filtersystem vom Einlassraum in den Auslassraum gelangen kann.

Die Flüssigkeitszuführung umfasst zunächst jegliche Vorrichtung, welche Flüssigkeit in den Einlassraum zuführen kann. Auch wenn sie für bevorzugte Ausführungsformen besonders gestaltet sein kann, kann sie in einem einfachen Fall durch den Bereich eines Rohres gebildet sein, welches einen Einlassbereich übergeht.

Der Flüssigkeitsabfluss umfasst zunächst jegliche Vorrichtung, welche Flüssigkeit aus einem der beiden Räume abfließen lässt. Ausgenommen ist selbstverständlich der Durchfluss durch den Filter, der nicht als Flüssigkeitsabfluss in diesem Sinne angesehen wird. Auch wenn er für bevorzugte Ausführungsformen besonders gestaltet sein kann, kann er in einem einfachen Fall durch den Bereich eines Rohres gebildet sein, welches aus einem Ein- oder Auslassbereich entspringt.

Bevorzugt besteht zwischen einem Flüssigkeitsabfluss des Einlassbereichs und einem Flüssigkeitsabfluss des Auslassbereichs kein direkter Kontakt, um eine Verunreinigung der gefilterten Flüssigkeit zu verhindern. Je nach Ausführungsform kann es jedoch trotzdem bevorzugt sein, wenn zwischen einem Flüssigkeitsabfluss des Einlassbereichs und einem Flüssigkeitsabfluss des Auslassbereichs kontakt besteht, z.B. durch einen weiteren Filter oder sonstiger Reinigungsvorrichtungen.

Der Flüssigkeitsabfluss des Einlassbereichs ist der Grund für den Druckunterschied bei dem oben beschriebenen erfindungsgemäßen Verfahren. Die Flüssigkeit drückt nicht mit dem gesamten Druck auf den Filter sondern ein Teil der Flüssigkeit bewegt sich durch den Flüssigkeitsabfluss des Einlassbereichs heraus und tritt nicht durch den Filter hindurch. Bei einer bevorzugten Ausführungsform ist der Filter relativ zum Flüssigkeitsfluss schräg angeordnet, so dass ein möglichst großer Anteil der Flüssigkeit mit dem Filter in Berührung kommt und die Möglichkeit besteht, dass dieser Anteil (oder ein Teil dessen) durch den Filter hindurchtreten kann.

Verunreinigungen werden von der am Filter vorbeiströmenden Flüssigkeit mitgenommen und treten nicht durch den Filter hindurch, was auch durch den Druckunterschied erreicht wird: Es entsteht nicht ausschließlich eine Strömung durch das Filtersystem hindurch, sondern auch eine Strömung am Filtersystem entlang.

Auf diese Weise kann ein Teil der Flüssigkeit zusammen mit den Verunreinigungen durch den Flüssigkeitsabfluss des Einlassbereichs aus dem Einlassbereich austreten, ohne den Filter passieren zu müssen.

Der Einlass der Flüssigkeit zum Einlassbereich kann an einer vorbestimmten Position erfolgen oder auch mittels eines Einspeisungsverteilers. Es ist für einige Ausführungsformen auch bevorzugt, dass die Flüssigkeitszuführung so gestaltet ist, dass sie relativ zum Filter, dem Rest der Vorrichtung und/oder den Flüssigkeitsabflüssen bewegbar, insbesondere drehbar, angeordnet ist.

Gemäß einer bevorzugten Ausführungsform umfasst das Filtersystem ein Filterband und ist insbesondere für Kunststoffschmelzen geeignet. Filtervorrichtungen, die sich eines Filterbandes oder "Bandsiebs" bedienen, sind grundsätzlich bekannt. Ein Filterband ist ein Band, meist aus Metall oder einem temperaturfesten Gewebe, welches mit einer Vielzahl kleiner Durchlässe versehen ist, die kleiner sind als die herauszufilternden Partikel. Dieses Band setzt sich nach einer Weile mit Partikeln zu. Im Gegensatz zu Filtern mit austauschbaren Filterelementen wird bei Bandfiltern das Band so verschoben, dass in den Filterbereich ein neues Teilstück des Bandes positioniert wird. Oftmals wird das Filterband durch eine spezielle Lochplatte oder einen Grill im Filter oder eine Kombination aus beiden Elementen abgestützt.

Im Folgenden wird bezüglich des Filtermediums von einem Filterband gesprochen. In der Regel ist dies ein "Bandsieb", also ein mit Löchern versehenes Trägermaterial (z.B. aus Stahlblech). Es kann sich aber auch um ein Gewebefilter sowie alle anderen möglichen bandförmigen Filtermedien handeln, die zur Filtrierung geeignet sind. Bevorzugte Filter umfassen Materialien der Gruppe Gewebe, Gewirke, Vliese, genadelte Filtermaterialien, kalandrierte Filtermaterialien und Stapelfaservliese (insbesondere aus Metallen, Natur- und Kunstfasern). Bevorzugt sind auch gelaserte, geätzte, gestanzte oder genadelte Bänder aus Folien, Kunststoffen, Metallen, Vliesen oder Papieren oder Kombinationen zweier oder mehrerer der vorgenannten Filter. Es werden Gewebe, Gewirke aus Metallen oder Legierungen und oder Natur oder Kunstfasern oder Mineralfasern bevorzugt. Dabei können die Gewebe auch aus Materialmischungen bestehen, also unterschiedliche Fäden eingesetzt werden. Als andere Möglichkeit können die unterschiedlichen Gewebe auch übereinander angeordnet werden, wobei eine Schichtung mit unterschiedlichen Feinheiten bevorzugt ist. Die Gewebe können auch Verstärkungen beinhalten um höhere Zugkräfte bei gleichzeitig feiner Filtration zu gewährleisten.

Des Weiteren können Bänder aus Metallen, Kunststoffen etc. in Form von Verbundmaterialien oder in Verbunden mit Geweben eingesetzt werden. Die Bänder können dabei einzeln vorher oder in diesem Verbund gestanzt, geätzt, gelasert oder genadelt werden und auch aus Kombinationen der Technologien eingesetzt werden.

Besonders bevorzugte Ausführungsformen der Filterbänder sind
- Bänder, die ein festes Trägermaterial aufweisen, welches mit Löchern versehen ist, welche insbesondere gestanzt, geätzt, gelasert oder gebohrt wurden, wobei das Trägermaterial aus Metall, Papier oder Kunststoff besteht,
- Bänder die ein Gewebefilter bilden, und Gewebe, Gewirke, Vliese, genadelte Filtermaterialien, kalandrierte Filtermaterialien und Stapelfaservliese umfassen, wobei bevorzugte Materialien Metallfasern, Kunststofffasern, Glasfasern, Kohlenstofffasern oder Naturfasern sind,
- Bänder, die aus schichtweisen Kombinationen der vorgenannten Bänder bestehen.

Eine bevorzugte Filtervorrichtung, insbesondere in Form eines Bandfilters, umfasst einen von Wandungen umschlossenen Innenraum, der einen Zufluss (Flüssigkeitszuführung) und einen Abfluss (Flüssigkeitsabfluss) für eine Schmelze (insbesondere an der gleichen Seite oder an gegenüberliegenden Seiten des Innenraumes) aufweist, wobei Zufluss (Flüssigkeitszuführung) und Abfluss (Flüssigkeitsabfluss) durch ein Filterband getrennt werden. Die Erfindung ist dadurch gekennzeichnet, dass der Zufluss und/oder der Abfluss außerhalb der Projektion der Filterposition parallel zur Mittelsenkrechten der Filterposition, abzüglich eines Randbereichs des Filterbereichs entsprechend dem Durchmesser des Zuflusses bezüglich der Position des Zuflusses und dem Durchmesser des Abflusses bezüglich der Position des Abflusses, positioniert ist.

Diese bevorzugte Ausführungsform trägt insbesondere in der Ausführungsform als Bandfilter dem Umstand Rechnung, dass die Schmelze mit einem vergleichsweise hohen Druck durch den Filter gepresst wird (Größenordnung um die 10 - 100 bar manchmal jedoch auch bis 300 bar) und die Seitenbereiche des Filters gegen Materialaustritte daher äußerst gut abgedichtet sein müssen.

Vorteil dieser bevorzugten Ausführungsform ist, dass die bisher verwendeten Systeme sehr groß sind und nicht platzsparend angeordnet werden können, und dass insbesondere als Bandfilterausführung eine kontinuierliche Verschiebung des Bandes insbesondere bei stark verschmutzten Schmelzen nicht oder nur schwer möglich ist. Das Filterband wird auf dem Weg durch den Filter stark mit Verunreinigungen kontaminiert, was zu Problemen bei der Abdichtung führen kann.

Ist die Flüssigkeitszuführung in den Einlassraum und/oder der Flüssigkeitsabfluss des Auslassraums außerhalb der Projektion der Filterposition parallel zur Mittelsenkrechten des Filtersystems, abzüglich eines Randbereichs des Filtersystems entsprechend dem Durchmesser der Flüssigkeitszuführung bezüglich der Position der Flüssigkeitszuführung und dem Durchmesser des Flüssigkeitsabflusses bezüglich der Position des Flüssigkeitsabflusses, positioniert ist.

Dass die Flüssigkeitszuführung und/oder der Flüssigkeitsabfluss (bevorzugt sowohl die Flüssigkeitszuführung als auch der Flüssigkeitsabfluss) außerhalb der Projektion des Filtersystems parallel zur Mittelsenkrechten des Filtersystems angeordnet sein sollen bedeutet, dass wenn man das Filtersystem von oben (längs ihrer Mittelsenkrechten) betrachtet, dürfen Flüssigkeitszuführung und/oder Flüssigkeitsabfluss sich nicht über dem Filtersystem befinden, abgesehen von dem Rand des Filtersystems, den sie gerade so mit ihrem Durchmesser überragen dürfen. Bevorzugt jedoch befinden sich Flüssigkeitszuführung und/oder Flüssigkeitsabfluss komplett außerhalb der betreffenden Projektion des Filtersystems.

Bevorzugte Positionen für Flüssigkeitszuführung/Flüssigkeitsabfluss sind seitlich des Filtersystems oder an dessen Ober-/Unterseiten jedoch dort lediglich am Rand. Dies hat den Vorteil, dass die Schmelze über große Teile des Filtersystems (mehr als 50%) tangential zu dieser strömt und die Filtrierung dadurch effektiver und sauberer wird.

Bevorzugt sind Flüssigkeitszuführung und/oder Flüssigkeitsabfluss seitlich zum Filtersystem angeordnet, so dass sie mit ihrer Längsachse senkrecht oder parallel zum Filtersystem im Innenraum münden.

Bevorzugt liegen Flüssigkeitszuführung und Flüssigkeitsabfluss jeweils an gegenüberliegenden Seiten der Vorrichtung. Dies hat den Vorteil, dass Schmelze in der Vorrichtung nahezu tangential über das Filtersystem strömt, was eine sehr gute Filtrierung zur Folge hat. Zudem ermöglicht diese Bauform eine Stapelung oder serienmäßige Anordnung mehrerer Vorrichtungen. Zudem ergeben sich immer die gleichen Weglängen im Schmelzefluss wodurch Verdrängerkörper, die im Stand der Technik oft eine gleichmäßige Siebnutzung bewirken, eingespart werden können.

Bevorzugt sind Flüssigkeitszuführung und Flüssigkeitsabfluss bezüglich einer Raumrichtung orthogonal zur Mittelsenkrechten des Filtersystems um nicht mehr als 45° geneigt, insbesondere um weniger als 20°, wobei dies die Neigung der Fließrichtung darstellt, also die Längsachse von Flüssigkeitszuführung/Flüssigkeitsabfluss. Eine Anordnung orthogonal zu dieser Flächennormalen ist besonders bevorzugt.

Bevorzugt sind Flüssigkeitszuführung und Flüssigkeitsabfluss bezüglich einer Raumrichtung parallel zur Breitenausdehnung des Filtersystems um nicht mehr als 45° geneigt, insbesondere um weniger als 20° (oder gar um weniger als 2°), wobei dies die Neigung der Fließrichtung darstellt, also die Längsachse von Flüssigkeitszuführung/Flüssigkeitsabfluss.

Gemäß einer bevorzugten Ausführungsform sind Flüssigkeitszuführung und/oder Flüssigkeitsabfluss so angeordnet, dass sich die einströmende bzw. ausströmende Schmelze parallel oder orthogonal zu derjenigen Richtung bewegt, in der ein Filterband bei einem Wechsel der Filterfläche verschoben wird.

Bevorzugt sind Flüssigkeitszuführung und/oder Flüssigkeitsabfluss so angeordnet, dass sich die einströmende bzw. ausströmende Schmelze parallel zur Ebene des Filtersystems und/oder parallel zur Längsachse des Filters bewegt.

Im Folgenden wird der Flüssigkeitsabfluss im Einlassraum auch als Primärschmelze-Abfluss genannt.

Bevorzugt befindet sich die Flüssigkeitszuführung oben und der Flüssigkeitsabfluss unten. Dies hat den Vorteil, dass Schmutzstoffe durch die Gravitation und den vorherrschenden Schmelzefluss automatisch nach unten sinken und insbesondere durch einen zusätzlichen Primärschmelze-Abfluss zielgerichtet abgeführt werden können.

Erfindungsgemäß umfasst die Vorrichtung einen Primärschmelze-Abfluss, der den Vorteil hat, dass Verunreinigungen gut abfließen können. Gerade bei Filterbändern erzeugen solche Verunreinigungen Hemmungen bei der Weiterführung des Filterbandes oder müssen durch breitere Durchführungen des Filterbandes aus dem Innenraum kompensiert werden, was wiederum in einer Herabsetzung der Dichtwirkung an dieser Stelle führt. Bei einer effektiven Abführung von Verunreinigungen aus dem Innenraum kann das Filterband durch eine vergleichsweise schmale Öffnung aus dem Innenraum herausgeführt werden, die aufgrund ihrer geringen Breite sehr gut abgedichtet werden kann.

Bevorzugt umfasst die Vorrichtung (insbesondere in der Ausführung als Bandfilter) zusätzlich eine Ausführeinheit, die aktiv Schmelze aus dem Innenraum durch den Primärschmelze-Abfluss leitet. Diese Ausführeinheit umfasst bevorzugt Elemente der Gruppe Förderschnecken, Saugvorrichtungen, Pressen, Schieber und Spüldüsen.

Mit der Ausführeinheit können Verunreinigungen aus dem Innenraum entfernt werden. Somit ist es möglich, denjenigen Bereich des Filters, der die größte Kontamination mit Verschmutzungen aufweist, während der Schmelzefiltrierung aus dem Innenraum zu bewegen und saubere Filterbereiche des Filterbandes auf der anderen Seite nachfolgen zu lassen. Dies würde einem Filtertransport während des Betriebs entsprechen und damit eine kontinuierliche Filtrierung ermöglichen. Durch die Ausführung von Verunreinigungen wird die Konzentration an Verschmutzung im Innenraum nicht ansteigen.

Die Geometrie der Schnecke ist vom verwendeten Filtermaterial der Art der bestimmungsgemäß erwarteten Verschmutzung und der gefilterten Kunststoffe abhängig. Die dazu verwendeten Elemente müssen hart genug sein um nicht zu verschleißen und bei den herrschenden Temperaturen formstabil bleiben.

Bevorzugt weisen die betreffenden Elemente Materialien der Gruppe temperaturstabile Kunststoffe, Keramik, Glas und Metall; und weisen insbesondere zusätzlich eine Oberflächenbeschichtung oder Panzerung auf, wie sie bereits von Extruderschnecken dem Fachmann bekannt sind. Bevorzugt ist dabei eine Oberflächenbeschichtung mittels Härten, Plasmanitrieren, Verchromen, Vernickeln, wobei Schichten umfassend DLC (diamond like carbon), Carbide, CrN oder TiN für die Oberflächen bevorzugt sind. Für die Oberflächenbeschichtung ist eine Plasmabeschichtung oder Flammbeschichtung bevorzugt.

In dem Falle, dass als Ausführeinheit eine Schnecke verwendet wird, ist diese bevorzugt so gestaltet, dass sie im Bereich des Filterbandes steilere Gänge aufweist als in dem Bereich, in dem sie austrägt. Dies hat den Vorteil, dass die Verunreinigungen vom Filtersystem (z.B. einem Filterband) durch die steilen Gänge gut und zügig abtransportiert werden und im Bereich wo sie austrägt durch die flacheren Gänge den Druck abbauen kann.

Bevorzugt ist der Primärschmelze-Abfluss mit der Ausführeinheit (z.B. ein Rohr, welches eine Reinigungsschnecke führt) senkrecht zum Filtersystem angeordnet. Wird eine Förderschnecke verwendet, ist diese bevorzugt so geformt, dass sie zur Ausfuhr von Material in oder gegen die Vorschubrichtung des Filterbandes läuft und insbesondere mit unterschiedlichen Reingungsstegen, Bürsten, Noppen, etc. ausgerüstet ist.

Gemäß einer bevorzugten Ausführungsform erstreckt sich der Wirkungsbereich der Ausführeinheit über die gesamte Breite der Filterposition, so dass ein Filtersystem (z.B. ein Filterband) über seine gesamte Breite von Verunreinigungen befreit werden kann. Es ist auch von Vorteil, wenn die Ausführeinheit (und insbesondere auch der Primärschmelze-Abfluss) dort im Innenraum angeordnet ist, wo das Filterband aus diesem bestimmungsgemäß herausgeschoben wird. Auf diese Weise ist es möglich, Verunreinigungen dort, wo sie sich besonders negativ auswirken, nämlich z.B. beim herausschieben eines Filterbandes, zu entfernen.

Gemäß einer bevorzugten Ausführungsform, umfasst die Vorrichtung (insbesondere in Form eines Bandfilters) ein Reinigungssystem für das Filterband außerhalb des Innenraumes an der Austrittsstelle des Filterbandes oder Innerhalb des Innenraumes. Diese Ausführungsform stellt auch eine eigenständige Erfindung dar, bei der nicht unbedingt Flüssigkeitszuführung und Flüssigkeitsabfluss seitlich zur Filterposition angeordnet sein müssen oder ein Primärschmelze-Abfluss vorhanden sein muss. Sie ergänzt jedoch diese beiden Ausführungsformen sehr vorteilhaft, da dadurch eine Rückführung des Filterbandes ermöglicht wird.

Bevorzugt umfasst das Reinigungssystem ein Reinigungselement oder zwei oder mehr Reinigungselemente, insbesondere Elemente der Gruppe Schaber, Walzen, Brenner und Schnecken, die das Filterband reinigen. Die Bewegung der Reinigungs-elemente kann relativ zur Vorschubrichtung des Filterbandes in gleicher oder gegenläufiger Richtung laufen. Bei der Verwendung mehrerer Reinigungselemente können diese gleich- oder gegenläufige Laufrichtungen haben.

Bevorzugt umfasst diese Ausführungsform ein Filterband in Form eines Endlosbandes. Durch eine Säuberung des Siebes (z.B. eine mechanische Reinigung und Rückspülung) kann dieses wieder als funktionsfähiges Sieb dienen und somit auch in den Filter zurückgeführt werden. Durch die Ausgestaltung als Endlosband ist eine Einsparung von Filterbändern und eine kompakte Bauform möglich.

Bei der bevorzugten Alternative, bei der das Reinigungssystem für das Filterband außerhalb des Innenraumes an der Austrittsstelle des Filterbandes angeordnet ist, könnte ein kontinuierlicher Betrieb durchgeführt werden.

Bei der Alternative bei der das Reinigungssystem Innerhalb des Innenraumes angeordnet ist, kann eine sehr kompakte und preisgünstige Bauform realisiert werden. Auch können Elemente verwendet werden, die bereits oben beschreiben worden sind, insbesondere der Primärschmelze-Abfluss zusammen mit der Ausführeinheit. Insbesondere bei einer kurzzeitigen Umkehr des Schmelzeflusses können aus dem Filterband herausgelöste Verunreinigungen mit diesen Elementen schnell von dem Filterband weg und aus dem Innenraum heraus geführt werden.

Gemäß einer bevorzugten Ausführungsform umfasst die Vorrichtung (insbesondere in Form eines Bandfilters) zusätzlich zu einer Ausführeinheit (z.B. einer Schnecke) einen Abstreifer als Reinigungselement im Innenraum, der so angeordnet ist, dass er das Filtersystem (z.B. ein Filterband) aktiv reinigt und dabei die Verunreinigungen zumindest teilweise in Richtung der Ausführeinheit schiebt. Bevorzugt ist auch eine Reinigungswalze als Abstreifer.

Die Geometrie des Abstreifers ist vom verwendeten Filtermaterial der Art der bestimmungsgemäß erwarteten Verschmutzung und der gefilterten Kunststoffe abhängig. Die dazu verwendeten Elemente müssen hart genug sein um nicht zu verschleißen jedoch vorzugsweise auch weich und flexibel genug, um das Filtersystem nicht zu beschädigen, oder zumindest so geformt, dass sie das Filtersystem nicht beschädigen. Zudem müssen sie bei den herrschenden Temperaturen formstabil bleiben.

Bevorzugte Materialien für die Abstreifer sind Materialien der Gruppe temperaturstabile Kunststoffe, Keramik, Glas und Metall. Die Abstreifer weisen insbesondere auch eine Oberflächenbeschichtung auf wie oben bezüglich der Elemente der Ausführeinheit beschrieben wurden.

Gemäß einer bevorzugten Ausführungsform kann das Reinigungssystem als Einheit oder dessen einzelne Reinigungselemente ausgetauscht werden, ohne den Filter ganz zu öffnen. Dazu umfasst die Vorrichtung in ihrem Gehäuse bevorzugt schmelzedicht verschließbare Öffnungen, durch die das komplette Reinigungssystem oder dessen Reinigungselemente erreicht und entnommen werden können.

Gemäß einer bevorzugten Ausführungsform sind die Reinigungselemente (z.B. die Abstreifer) mit Elementen aus Kunststoff, Kupfer, Messung, Bronze, oder härteren Elementen, insbesondere aus Metall oder Keramik gesinterten Elementen bestückt.

Als Filter können im Grunde alle Medien verwendet werden, welche aus einem Basismaterial bestehen das mit Öffnungen versehen ist.

Bevorzugte Filter umfassen mit Öffnungen versehene Platten, Faserverbünde (gewirkt, gestickt, gewebt Stapelfaservliese, genadelt, kalandriert, oder Gitter (z.B. Siebe). Die Öffnungen können gelasert, gestanzt, gebohrt oder geätzt sein. Die Filter können gewebt, gestrickt, kalandriert, als Stapelfaservliese genadelt und oder kalandriert, aus festen Materialien gesintert oder mittels Verpressen von Fasern hergestellt sein.

Des Weiteren enthalten bevorzugte Filter Partikel, welche zum Filtern der jeweiligen viskosen Flüssigkeit geeignet sind, insbesondere Partikel der Gruppe metallische und/oder keramische Partikel, Sande, Salze und Kunststoffpartikel.

Gemäß einer bevorzugten Ausführungsform sind die Partikel oberflächenmodifiziert, so dass sie eine Oberfläche aufweisen, welche durch eine Behandlung vergrößert oder mit zusätzlichen Stoffen versehen wurde. Insbesondere ist die Oberfläche der Partikel hydrophob oder hydrophil gestaltet.

Gemäß einer bevorzugten Ausführungsform, die auch eine eigenständige Erfindung ohne die oben genannte Filtervorrichtung darstellen kann, und gegenüber dem Stand der Technik eine verbesserte Reinigungswirkung und einen verbesserten Schutz vor einem unerwünschten Partikeldurchgang bietet, wird der Filter mittels einer Platte gebildet, in die Löcher eingebracht sind (Siebplatte), wobei die Stirnseiten der Löcher relativ zur Längsachse des Filters geneigt sind und/oder die Wandungen der Löcher relativ zur Orthogonalen der Längsachse des Filters geneigt sind. Diese Neigung ist insbesondere größer als 10°, bevorzugt größer als 30°, in einigen Anwendungen bevorzugt größer als 60° und kann im Falle der Stirnseiten auch 90° oder größer betragen.

Gemäß einer bevorzugten Ausführungsform ist die Orientierung des Filters relativ zur vorbestimmten Anströmrichtung der Flüssigkeit so, dass die Flüssigkeit nicht orthogonal auf den Filter trifft, sondern der Filter ist dermaßen angeordnet, dass die Strömungsrichtung der Flüssigkeit relativ zur Flächennormalen des Filters in einem Winkel zwischen 30° und 90° verläuft.

In Zusammenwirkung mit der vorangehend beschriebenen Ausführungsform sind die Löcher relativ zum Flüssigkeitsstrom so ausgerichtet, dass die Flächennormale der geneigten Stirnseiten und/oder die Achsen der Seitenwände in Fließrichtung des Flüssigkeitsstroms geneigt sind, also von der Einströmposition fort zeigen.

Bevorzugt sind die Löcher im Filter dermaßen angeordnet, dass sich die Form einer Reibe ergibt.

Dies verbessert den oben beschriebenen Effekt weiter. Durch die zweite Strömungsrichtung der Flüssigkeit am Filter entlang in Richtung Flüssigkeitsabfluss des Einlassbereichs werden Verunreinigungen mitgenommen und können durch die besondere Anordnung bzw. Ausformung der Löcher auf ihrem Weg nicht mehr durch den Filter hindurch bewegen. Auch ein Hängenbleiben von Partikeln oder Gelaten wird durch die besondere Form bzw. Anordnung der Löcher verhindert.

Gemäß einer bevorzugten Ausführungsform haben die Filter eine gekrümmte Form und sind insbesondere parallel zueinander angeordnet, wie beispielsweise zwei parallele Zylindermäntel. Eine konzentrische Anordnung ist dabei bevorzugt.

Ebenso ist eine konische Form von Filtern bevorzugt, welche insbesondere ebenfalls parallel zueinander angeordnet sind, wie z.B. auf zwei parallelen Kegelmänteln.

Gemäß einer bevorzugten Ausführungsform sind mindestens drei Filter um einen zentralen Filter, insbesondere auf einer drehbaren Fläche, angeordnet. Die Anordnung ist bevorzugt strahlenförmig, wobei die Filter nicht parallel zu den Strahlen orientiert sind sondern in jeweils gleichen Drehsinn verkippt, so dass von oben das Bild eines Wirbels entsteht.

Dass der Boden des Einlassraums das Filtersystem umfasst oder dieser Boden zumindest teilweise durch das Filtersystem gebildet wird hat den Vorteil, dass die einlaufende Flüssigkeit alleine durch ihrer Schwerkraft durch das Filtersystem gedrückt wird, während sie durch den Einlassraum zum Flüssigkeitsabfluss des Einlassraumes fließt.

Die Flüssigkeitszuführung ist zentral über dem Filtersystem angebracht oder an der Seite des Einlassraums und erfolgt optionaler Weise insbesondere parallel zur Flächennormalen des Filtersystems (Einströmung von oben auf das Filtersystem) oder orthogonal zur Flächennormalen des Filtersystems (Einströmung seitlich zum Filtersystem).

Um bei vorgegebener Fließgeschwindigkeit der Flüssigkeit und kompakter Bauform der Vorrichtung einen längere Verweildauer der Flüssigkeit über dem Filtersystem zu ermöglichen, sind über dem Filtersystem Strömungselemente angebracht, welche die Strömung der Flüssigkeit regeln, so dass sie nicht auf direktem Weg zum Flüssigkeitsauslass des Einlassraum fließt. Die Strömungselemente haben eine Wendel- oder Serpentinenform.

Gemäß einer bevorzugten Ausführungsform, welche eine besonders kompakte Bauform ermöglicht, sind die Strömungselemente in Form mindestens eines Wendels angeordnet. Von der Flüssigkeitszuführung, die bevorzugt zentral über dem Filtersystem angeordnet ist, fließt die Flüssigkeit in den Einlassbereich ein und wird über dem Filtersystem in eine spiralige Flussrichtung gedrängt, insbesondere von außen nach innen oder von innen nach außen, so dass sie, insbesondere über 90% des Weges vom Flüssigkeitseinlass zum Flüssigkeitsabfluss des Einlassraums, über das Filtersystem strömt. Am Ende ihres Weges, also bevorzugt im Zentrum oder am Rand des Wendels, ist mindestens ein Flüssigkeitsauslass angeordnet, um die restliche Flüssigkeit, in der sich Schmutzteilchen angereichert haben, aus dem Einlassraum abzuführen.

Gemäß einer bevorzugten Ausführungsform, welche eine besonders kompakte rohrartige Bauform ermöglicht, sind die Strömungselemente in Form mindestens einer Serpentine angeordnet. Von der Flüssigkeitszuführung, die bevorzugt an einem Rand des (insbesondere langgezogenen) Filtersystems angeordnet ist, fließt die Flüssigkeit in den Einlassbereich ein und wird über dem Filtersystem in alternierender Flussrichtung geführt, insbesondere jeweils orthogonal zur resultierenden Flussrichtung bzw. der Ausrichtung des Rohres, welches den Einlassraum bildet (z.B. wechselseitig nach rechts und links). Am Ende ihres Weges, also bevorzugt am Ende des Rohres, ist mindestens ein Flüssigkeitsauslass angeordnet, um die restliche Flüssigkeit, in der sich Schmutzteilchen angereichert haben, aus dem Einlassraum abzuführen.

Die Strömungselemente sind so gestaltet, dass sie nicht die gesamte Flüssigkeit leiten, sondern auch eine Strömung unter oder über ihnen stattfinden kann. Auf diese Weise wird der statische Druck der Flüssigkeit auf den Filter weiter reduziert.

Gemäß einer bevorzugten Ausführungsform, welche eine sehr einfache und trotzdem wirkungsvolle Ausführung der Erfindung erlaubt, ist ein Filtersystem dermaßen in einem Rohr angeordnet, dass, relativ zur Strömungsrichtung der Flüssigkeit, hinter dem Filtersystem das Rohr in zwei Flüssigkeitsabflüsse unterteilt ist oder ein Flüssigkeitsabfluss vor dem Rohr abzweigt und ein Flüssigkeitsabfluss weiter im Rohr verläuft, wobei einer dieser Flüssigkeitsabflüsse direkt mit dem Einlassbereich verbunden ist und ein anderer erst nach Durchgang durch das Filtersystem erreicht wird (und dies dann Auslassbereich und Flüssigkeitsabfluss des Auslassbereichs darstellt).

Besonders bevorzugt ist dabei, dass Filtersystem schräg im Rohr anzuordnen, so dass es zu dessen Querschnittsfläche (bzw. orthogonal zur Strömungsrichtung) insbesondere in einem Winkel zwischen 10° und 90°, insbesondere zwischen 30° und 70°, geneigt ist.

Gemäß einer weiteren bevorzugten Ausführungsform hat ein Filtersystem die Form einer Spirale und die Vorrichtung ist dermaßen ausgeformt, dass die hindurchlaufende Flüssigkeit an einer Wandung dieser Spirale bis zu einem Flüssigkeitsabfluss fließt und die durch das Filtersystem hindurchgegangene Flüssigkeit durch einen anderen Flüssigkeitsabfluss abfließt. Auf diese Weise lässt sich im Vergleich mit der vorangegangenen Ausführungsform die Filterfläche auf kleinem Gesamtraum vergrößern.

Gemäß einer bevorzugten Ausführungsform werden die Filter relativ zur Flüssigkeit bewegt, bzw. umfasst die Filtervorrichtung ein Bewegungssystem, welches dazu ausgelegt ist, Filter zu bewegen.

Gemäß einer bevorzugten Ausführungsform umfasst dieses Bewegungssystem ein Fördersystem, welches dazu ausgelegt ist, den Filter, der in diesem Falle insbesondere die Form eines Bandes oder einer Vielzahl von Filterelementen hat, in einer Richtung zu bewegen, so dass bereits verwendete Teile des Filters (bzw. Filterelemente) aus dem Flüssigkeitsstrom entnommen werden und nicht verwendete Teile des Filters (bzw. Filterelemente) in den Flüssigkeitsstrom hineinbewegt werden.

Gemäß einer bevorzugten Ausführungsform, die insbesondere mit dem oben genannten Fördersystem kombiniert werden kann, umfasst das Bewegungssystem ein Vibrationssystem, welches dazu ausgelegt ist, mindestens einen Filter mit einer Frequenz von > 1 Hz hin- und herzubewegen. Dies dient zur kurzzeitigen, lokalen Herabsetzung der Viskosität der Flüssigkeit. Je nach Art der Flüssigkeit und der Viskosität ist es dabei von Vorteil, dass die Vibration mit einer Frequenz > 50 Hz oder gar > 200 Hz erfolgt. Als obere Grenze der Frequenz ist insbesondere 100 kHz sinnvoll, da ab einer gewissen Frequenz zunehmend Störeffekte auftreten.

Es ist auch bevorzugt, dass diese Vibrationsbewegung eines Filters relativ zu einem anderen Filter stattfindet. Auf diese Weise ist es möglich, Gelpartikel zu zerkleinern, welche in die Filterdurchlässe eingedrungen sind.

Bevorzugt erfolgen die Vibrationen bezüglich des Filters transversal (orthogonal zur Flächennormalen) und/oder normal (parallel zur Flächennormalen).

Gemäß einer bevorzugten Ausführungsform umfasst dieses Bewegungssystem ein Rotationssystem (insbesondere in Kombination mit den vorangehenden Ausführungsformen), welches dazu ausgelegt ist, mindestens zwei Filter relativ zueinander zu drehen. Dies hat den Vorteil, dass einerseits die Viskosität der umgebenden Flüssigkeit herabgesetzt werden kann und ebenfalls Gelpartikel, welche in die Filterdurchlässe eingedrungen sind, zerkleinert werden können.

Gemäß einer bevorzugten Ausführungsform umfasst die Filtervorrichtung ein Temperiersystem, welches dazu ausgelegt ist, mindestens einen Filter zu erwärmen, insbesondere eine Filter, der mit der einströmenden Flüssigkeit direkt in Kontakt steht. Durch die Erwärmung kann die Viskosität der Flüssigkeit kurzfristig herabgesetzt werden und ein einfacher Durchgang durch den Filter erfolgen. Die Temperatur wird vorzugsweise so gewählt, dass die innere Viskosität von Verunreinigungen, welche auf diese Temperatur erwärmt werden (z.B. von gelförmigen Verunreinigungen) nicht oder zumindest nicht in gleichem Maße herabgesetzt wird, wie die Viskosität der Flüssigkeit.

Gemäß einer bevorzugten Ausführungsform wird die viskose Flüssigkeit mit Zusätzen vermischt, welche die Viskosität vermindern oder erhöhen. Bevorzugt ist dabei eine Zugabe von Monomeren, insbesondere in dem Falle, dass die viskose Flüssigkeit ein Kunststoff ist, sind dabei die Monomere bevorzugt von der Art, wie sie auch in den Polymerketten des Kunststoffs vorkommen. Die Monomere können dabei von identischem chemischen Aufbau sein, bei einigen Ausführungen kann es auch von Vorteil sein, wenn Monomere mit unterschiedlichem chemischen Aufbau verwendet werden (jedoch insbesondere nur insofern diese Monomere auch in den Polymerketten des Kunststoffs enthalten sind. Die Zugabe von Monomeren hat den Vorteil, dass die Viskosität erniedrigt wird und diese nach dem Filtervorgang aber nicht zwingend entfernt werden müssen sondern einfach mit den Polymeren verbunden werden können.

Zur Reinigung des Filters kann die Flüssigkeit selber verwendet werden. Die Kraft, die auf Verunreinigungen wirkt, ist dabei abhängig von der Viskosität der Flüssigkeit und der Fließgeschwindigkeit. Ein physikalischer Zugang zu dieser Materie ist jedoch kompliziert, und eine quantitative Definition des Verhältnisses von Fließgeschwindigkeit und Viskosität würde den Rahmen dieser Erfindung sprengen. Es ist dem Fachmann jedoch durch Messungen des Drucks zwischen Einlasssystem uns Auslasssystem und/oder durch visuelle Überprüfung möglich, den Zustand des Filters bezüglich einer Bedeckung oder Verstopfung mit Verunreinigungen zu überprüfen. Viskosität und/oder Fließgeschwindigkeit werden dann so eingestellt, dass diese Verunreinigungen mit der Flüssigkeit, welche nicht durch den Filter gedrungen ist, mitgenommen werden.

Da bei einigen Anwendungen die Viskosität der Flüssigkeit nicht verändert werden sollte, ist es in diesen Fällen von Vorteil, wenn alleine die Fließgeschwindigkeit diesbezüglich geregelt wird.

Der Vorteil an dieser Ausführungsform ist, dass keine zusätzlichen Reinigungselemente verwendet werden müssen und ein Austausch des Filters herausgeschoben werden kann oder gar unnötig wird. Durch die Querströmung und die besondere Ausführung der Filterplatten wird der Filter ständig gereinigt

Der Teil der Flüssigkeit, welcher durch den Flüssigkeitsabfluss des Einlassraums austritt, trägt im Vergleich zur einströmenden Flüssigkeit eine erhöhte Konzentration der Verschmutzung mit sich. Zum einen, weil ein Teil der Flüssigkeit durch den Filter gedrungen ist, und die Schmutzteilchen nicht, zum anderen, weil die Flüssigkeit Schmutzteilchen vom Filter mitgenommen hat.

Gemäß einer bevorzugten Ausführungsform wird dieser Flüssigkeitsanteil ausgesondert oder durch einen weiteren Filter gefiltert. Dieser weitere Filterungsschritt kann durch eine weitere erfindungsgemäße Vorrichtung erfolgen und/oder einen qualitativ sehr hochwertigen Filter. Mit einem qualitativ sehr hochwertigen Filter könnte es bei einigen Anwendungen auch möglich sein, eine herkömmliche Filtervorrichtung zu verwenden. Es wäre auch eine Rückführung des Flüssigkeitsstroms möglich. Mittels der erneuten Filterung des Flüssigkeitsstroms kann Material zurückgewonnen werden.

Wie oben beschrieben wird, findet eine Aufspaltung des initialen Flüssigkeitsstroms statt. Der eine Teil fließt durch das Filtersystem und enthält näherungsweise keine Verunreinigungen mehr (im Folgenden auch als "Filtrat" bezeichnet), der andere Teil (im Folgenden als "Restflüssigkeit" bezeichnet) fließt durch den Flüssigkeitsabfluss des Einlassraums und enthält die Verunreinigungen, die nun in vergleichsweise hoher Konzentration in der Restflüssigkeit vorliegen.

Gemäß einer bevorzugten Ausführungsform, welche einen Druckfiltertest auch bei Anwendung der vorliegenden Erfindung erlaubt, umfasst die Vorrichtung ein Sensorsystem, welches dazu ausgelegt ist, an zumindest einem Teil der Restflüssigkeit einen Druckfiltertest durchzuführen und zusätzlich den Fluss (Volumen/Zeit) der initialen Flüssigkeit zu bestimmen. Zudem ist die Vorrichtung zusätzlich dazu ausgelegt, zu bestimmen, in welchem Maße eine Konzentrationssteigerung von Verunreinigungen in der Restflüssigkeit verglichen mit der initialen Flüssigkeit stattgefunden hat.

Die Bestimmung der Konzentrationssteigerung kann in der einfachsten Ausführung dadurch bestimmt werden, dass zuvor an der initialen Flüssigkeit ein Druckfiltertest durchgeführt wurde und das Ergebnis dieser Messung zusammen mit der Annahme, dass dieser Wert für die gesamte initiale Flüssigkeit gilt, zusammen mit einer Messung eines representativen Teils der Restflüssigkeit als Konstante für die normale Konzentrationssteigerung verwendet werden. Liegt nun bei Vergleichsmessungen der Anteil an Verunreinigungen über der Messung des o.g. representativen Teils, kann auf einen entsprechend höheren Anteil an Verschmutzung in der initialen Flüssigkeit geschlossen werden.

Gemäß einer weiteren Ausführungsform ist das Sensorsystem zusätzlich dazu ausgelegt, den auf das Filtersystem wirkenden Druck zu bestimmen. Damit kann eine zunehmende Verschmutzung des Filters ermittelt werden.

Gemäß einer bevorzugten Ausführungsform ist das Sensorsystem zusätzlich dazu ausgelegt, den Fluss der Restflüssigkeit und/oder den Fluss des Filtrats zu bestimmen. Auf diese Weise wird zusammen mit der Flussmessung der initialen Flüssigkeit für ein bestimmtes Volumenelement der Flüssigkeit bestimmt, welcher Anteil Filtrat und welcher Anteil Restflüssigkeit ist. Nach dem Druckfiltertest an dem betreffenden Volumenelement der Restflüssigkeit kann genau berechnet werden, welcher Anteil an Verunreinigungen in der initialen Flüssigkeit vorlag.

Gemäß einer bevorzugten Ausführungsform wird zum Druckfiltertest an einem Volumen der Restflüssigkeit zumindest dieses Volumen im Hinblick auf den statischen Druck von dem Flüssigkeitsabfluss des Einlassraums entkoppelt. Dies hat den Vorteil dass eine Druckmessung im Rahmen des Druckfiltertests nicht durch den Druck der übrigen Flüssigkeit verfälscht wird und zudem kein Druckanstieg am Filtersystem durch den Druckfiltertest stattfindet. Eine solche Entkopplung kann durch Entnahme des betreffenden Volumens der Restflüssigkeit oder durch Einbau einer Flüssigkeitspumpe hinter dem Flüssigkeitsabfluss des Einlassraums bewerkstelligt werden.

Insbesondere mit dieser Ausführungsform ist ein Druckfiltertest im laufenden Betrieb möglich, wobei in Verbindung mit den vorangehenden Ausführungsformen sogar auf den Grad der Verschmutzung der initialen Flüssigkeit geschlossen werden kann. Es ist also ein Online-Monitoring der einlaufenden Flüssigkeit möglich.

Die Vorrichtung ist im Grunde auch für Flüssigkeiten mit niedriger Viskosität (<5 mPa s) geeignet, ihr Vorteil zeigt sich aber besonders bei Flüssigleiten mit Viskositäten > 5 mPa·s insbesondere > 100 mPa·s. Die obere Grenze für die Viskosität liegt dabei dort, wo nicht mehr von einem Fließen im herkömmlichen Sinn gesprochen werden kann, insbesondere liegt die Viskosität unterhalb 1.000.000.000.000 mPa·s.

Beispiele für bevorzugte Ausführungsformen der erfindungsgemäßen Filtervorrichtung sind in den Abbildungen dargestellt.
- Fig. 1: zeigt schematisch eine bevorzugte Ausführungsform;
- Fig. 2: zeigt schematisch eine weitere bevorzugte Ausführungsform;
- Fig. 3: zeigt schematisch eine dritte bevorzugte Ausführungsform;
- Fig. 4: zeigt schematisch einen bevorzugten Filter in Wendelform von oben;
- Fig. 5: zeigt schematisch den Filter in Wendelform in Seitenansicht;
- Fig. 6: zeigt schematisch einen bevorzugten Filter;
- Fig. 7: zeigt schematisch einen weiteren bevorzugten Filter.
- Fig. 8: zeigt eine bevorzugte Ausführungsform als Bandfilter in Seitenansicht.
- Fig. 9: skizziert eine bevorzugte Ausführungsform perspektivisch.
- Fig. 10: skizziert eine bevorzugte Ausführungsform von oben.

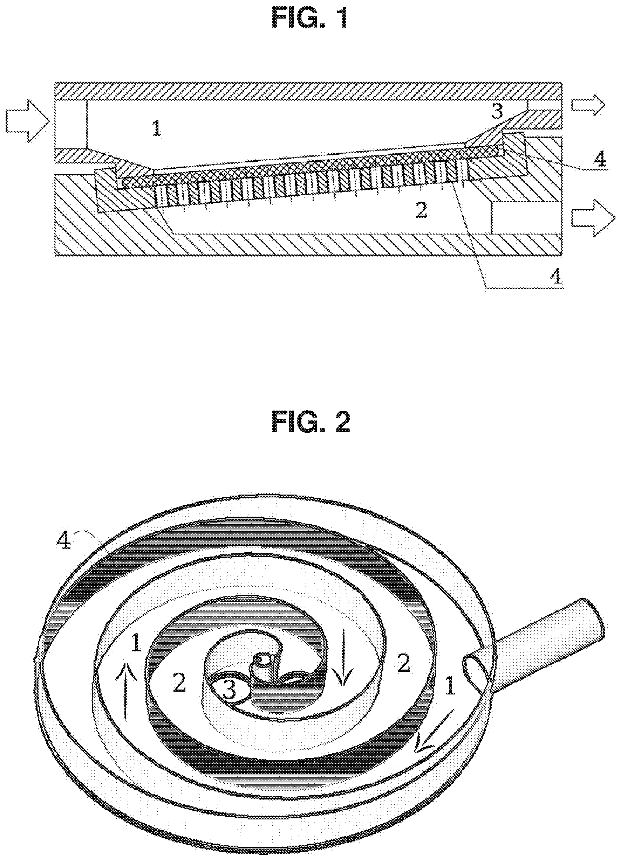

In Figur 1 ist eine bevorzugte Ausführungsform dargestellt, welche eine sehr einfache und trotzdem wirkungsvolle Ausführung der Erfindung erlaubt. In einem Rohr ist ein Filtersystem 4 dermaßen angeordnet, dass es einen im Rohr abgetrennten Auslassbereich 2 überdeckt. Der Rohrbereich vor dem Filtersystem kann als Einlassbereich 1 angesehen werden und ein weiterer hinter dem Filtersystem abgetrennter Bereich des Rohres, welcher nicht von dem Filter verschlossen wird ist der dem Einlassbereich zugeordnete Flüssigkeitsabfluss 3. Das Filtersystem 4 ist dabei schräg im Rohr angeordnet und umfasst ein obenliegendes Sieb und eine untenliegende Siebstützplatte.

Figur 2 zeigt eine weitere bevorzugte Ausführungsform, bei der das Filtersystem 4 die Form einer Spirale hat. In dem dargestellten Fall befindet sich der Auslassbereich 2 auf der einen Seite des Filtersystems und der Einlassbereich 1 auf der anderen Seite. Rechts und links der Mitte befinden sich zwei Flüssigkeitsabflüsse. Links ist der dem Einlassbereich zugeordnete Flüssigkeitsabfluss 3 zu erkennen und rechts ein Teil des dem Auslassbereich 2 zugeordneten Flüssigkeitsabfluss. Strömt nun Flüssigkeit durch das rechts eingezeichnete Rohr, welches die Flüssigkeitszuführung bildet, in den Einlassraum 1 ein, so wird die Flüssigkeit an dem Filtersystem 4 entlang strömen und zur Mitte hin in Form einer Spirale abfließen. Währenddessen tritt durch die Schwerkraft bedingt, Flüssigkeit durch die Filter hindurch und strömt gefiltert durch den Auslassbereich, an dessen Ende es durch den betreffenden Flüssigkeitsabfluss abfließen kann.

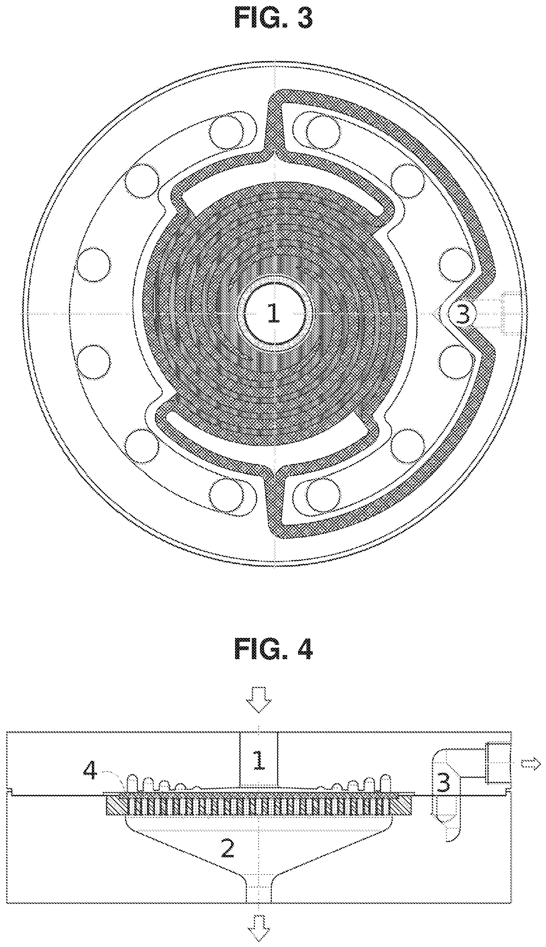

In den Figuren 3 und 4 wird eine weitere bevorzugte Ausführungsform einer erfindungsgemäßen Vorrichtung dargestellt, wobei Figur 3 die Vorrichtung in Aufsicht und Figur 4 die Vorrichtung von der Seite als Schnitt durch die horizontalen, mittleren Achse der Figur 3 zeigt.

Durch einen zentral angeordneten Einlassbereich strömt die zu filternde Flüssigkeit ein und bewegt sich zunächst in dem gestrichelten Bereich (s. Figur 3) radial nach außen, während ein Teil von ihr bereits durch den unter dem Einlassbereich und der kompletten spiraligen Form in Figur 3 angeordneten Filter 4 (s. Figur 4) bereits in den Auslassbereich gelangt. Eine Wendelform (punktierter Bereich in Figur 3) regt die Flüssigkeit zu einer spiraligen Bewegung an, wobei eine radiale Ausbreitung nach außen zunächst noch möglich ist, aber bei steigendem Radius erschwert wird (s. keilförmigen Zwischenraum unter den Spiralräumen in Figur 4) und zuletzt nicht mehr möglich ist. Durch Kanäle wird derjenige Teil der Flüssigkeit, der nicht durch den Filter 4 gedrungen ist, zum Flüssigkeitsauslass 3 geführt.

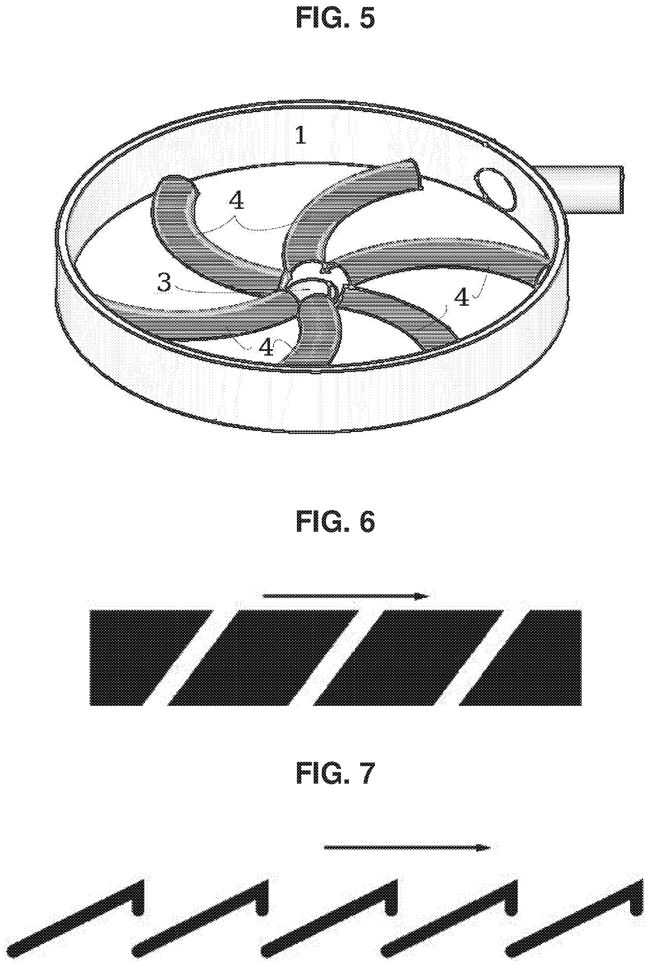

Figur 5 zeigt eine weitere bevorzugte Ausführungsform, bei der das Filtersystem 4 die Form eines Wirbels oder Wendels hat. In dem dargestellten Fall befindet sich der Auslassbereich unter den Filtern und ist nicht zu sehen. Die Filter reichen in dem dargestellten Fall nicht bis an den oberen Rand des Raumes, der den Einlassbereich 1 bildet sondern verlaufen an dessen Boden. In der Mitte befindet sich der dem Einlassbereich zugeordnete Flüssigkeitsabfluss 3. Strömt nun Flüssigkeit durch das rechts oben eingezeichnete Rohr, welches die Flüssigkeitszuführung bildet, in den Einlassraum 1 ein, so wird die Flüssigkeit über die Filter des Filtersystems 4 strömen und zur Mitte hin in Form eines Wirbels abfließen. Währenddessen wird es durch die Form des Filtersystems geführt und ein Teil der Flüssigkeit tritt gleichzeitig durch das Filtersystem 4 hindurch und fließt gefiltert ab.

Die Figuren 6 und 7 zeigen zwei vorteilhafte Filter. Der über den Figuren angeordnete Pfeil soll die Strömungsrichtung der Flüssigkeit angeben. Über dem Filter befindet sich der Einlassbereich, unter dem Filter der Auslassbereich.

In Figur 6 weist der Filter schräge Löcher auf, die entgegen dem Flüssigkeitsfluss geneigt sind. Die Flüssigkeit wird somit nicht von der nachfolgenden Flüssigkeit durch die Löcher gedrückt sondern muss auf ihrem Weg durch den Filter eine Richtungsänderung von mehr als 90° bezüglich ihrer Strömungsrichtung vollführen.

In Figur 7 hat der Filter die Form eines Sägezahns, wobei die Löcher jeweils an den dem Flüssigkeitsfluss abgewandten Flanken angeordnet sind. Auch hier muss die über den Filter strömende Flüssigkeit auf ihrem Weg durch den Filter eine Richtungsänderung von mehr als 90° bezüglich ihrer Strömungsrichtung vollführen.

Beide Filterformen dienen insbesondere dazu, dass gelartige Verunreinigungen nicht durch den Filter gedrückt werden sondern selbst wenn sie an eines der Löcher gelangen sollten, von der vorbeiströmenden Flüssigkeit wieder mitgenommen werden.

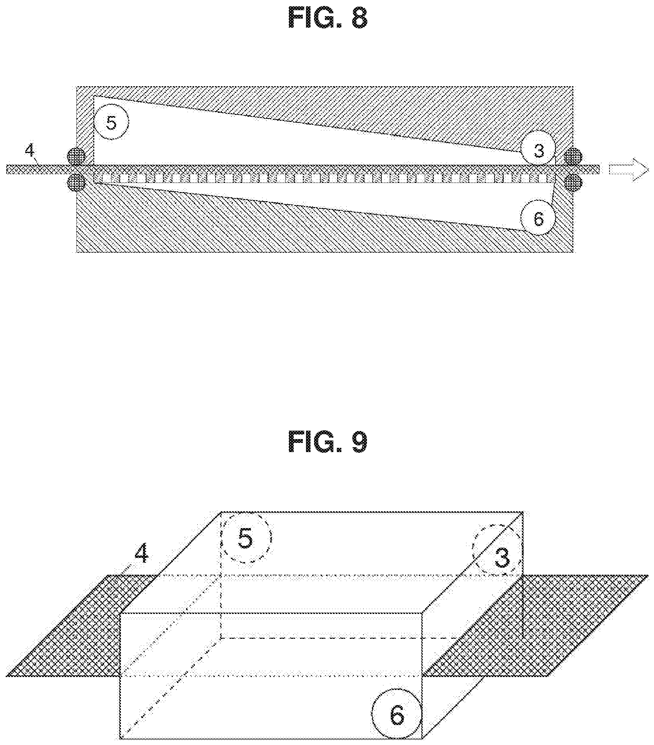

Figur 8 zeigt schematisch eine bevorzugte Ausführungsform eines erfindungsgemäßen Bandfilters in Seitenansicht, bei dem Zufluss 5 und Abfluss 6 an den Seiten des Filters 4 in Form eines Filterbandes angeordnet sind. Durch den Zufluss 5 auf dessen Querschnitt man nun blickt kann eine Schmelze von der Seite in den Innenraum gelangen (aus der Richtung des Betrachters oder von unter der Blattebene), durch den Filter 4 in Form eines Filterbandes hindurchfließen, und aus dem Abfluss 6 wieder herausfließen (in die Richtung des Betrachters oder nach unten zur Blattebene). Das Filterband ist wiederum selbstverständlich so angeordnet, dass die Schmelze, um von der Zufluss 5 zum Abfluss 6 zu gelangen durch das Filterband fließen muss und nicht auf einem anderen Weg an dem Filterband vorbeifließen kann.

Deutlich ist zu erkennen, dass der Zufluss 5 und der Flüssigkeitsabfluss, selbst wenn sie seitlich etwas über den Filter ragen sollten, zumindest in einem Randbereich des Filterbereichs entsprechend dem Durchmesser des Zuflusses 5 bezüglich der Position des Zuflusses 5 und dem Durchmesser des Flüssigkeitsabflusses bezüglich der Position des Flüssigkeitsabflusses angeordnet sind.

Im Einlassbereich des Innenraums ist ein Primärschmelze-Abfluss (der dem Einlassbereich zugeordnete Flüssigkeitsabfluss 3) angedeutet, durch die verschmutzte Schmelze aus dem Einlassbereich entfernt werden kann.

In Figur 9 ist eine mögliche Positionierung von Zufluss 5, Abfluss 6 und Primärschmelze-Abfluss (der dem Einlassbereich zugeordnete Flüssigkeitsabfluss 3), der bevorzugt noch mit einer hier nicht dargestellten Ausführeinheit zusammen wirkt, perspektivisch dargestellt. Der Zufluss 5 befindet sich hier auf der dem Betrachter abgewandten Seite, der Abfluss 6 auf der dem Beobachter zugewandten Seite und der Primärschmelze-Abfluss (der dem Einlassbereich zugeordnete Flüssigkeitsabfluss 3) auf der dem Betrachter abgewandten Seite (kann aber durchaus auch auf der dem Beobachter zugewandten Seite angeordnet sein).

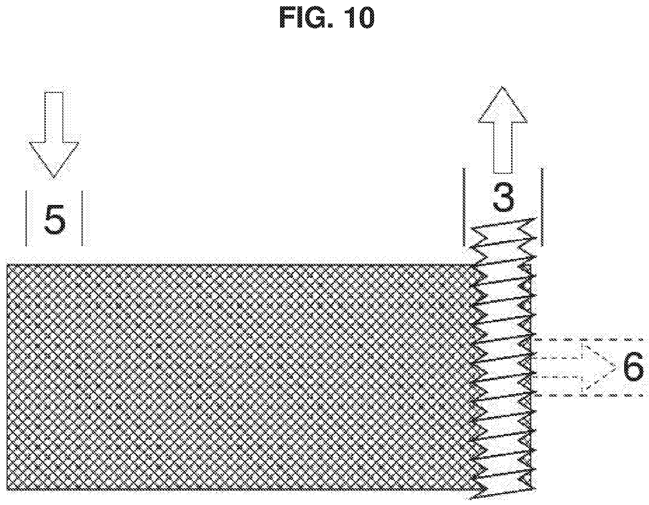

Figur 10 zeigt eine bevorzugte Ausführungsform, eine Variation der vorgenannten, von oben. Bei dieser ist der Primärschmelze-Abfluss (der dem Einlassbereich zugeordnete Flüssigkeitsabfluss 3) mit einer Förderschnecke als Ausführeinheit versehen, wobei diese Schnecke über die gesamte Breite des Filterbandes reicht und Verunreinigungen über diese gesamte Breite in den Abfluss 6 der Ausführeinheit (in den dem Einlassbereich zugeordnete Flüssigkeitsabfluss 3) verbringen kann. Hier befindet sich der Zufluss 5 an der Seite des Innenraums (dessen Begrenzungen hier nicht dargestellt sind) und der Abfluss 6 befindet sich unter dem Filterband, was durch die gestrichelten Linien angedeutet wird.

## Patentansprüche

1. Filtervorrichtung, umfassend einen Einlassraum (1), einen Auslassraum (2), und ein Filtersystem (4), welches den Einlassraum (1) und den Auslassraum (2) trennt, wobei der Einlassraum (1) mindestens eine Flüssigkeitszuführung und mindestens einen Flüssigkeitsabfluss (3) umfasst und der Auslassraum (2) keine Flüssigkeitszuführung und mindestens einen Flüssigkeitsabfluss (3) umfasst, wobei der Boden des Einlassraums (1) zumindest teilweise durch das Filtersystem (4) gebildet ist, **dadurch gekennzeichnet, dass** die Flüssigkeitszuführung zentral über dem Filtersystem (4) oder an der Seite des Einlassraums (1) angebracht ist, und über dem Filtersystem (4) Strömungselemente angebracht sind, welche so gestaltet sind, dass eine Strömung unter oder über ihnen stattfinden kann und eine Wendel- oder Serpentinenform aufweisen und die Strömung der Flüssigkeit regeln, so dass sie nicht auf direktem Weg zum Flüssigkeitsauslass (3) des Einlassraum (1) fließt.

2. Filtervorrichtung nach Anspruch 1, **dadurch gekennzeichnet, dass** das Filtersystem (4) dermaßen angeordnet ist, dass die Anströmrichtung der Flüssigkeit relativ zur Flächennormalen des Filters in einem Winkel zwischen 10° und 90°, insbesondere zwischen 30° und 70°, verläuft.

3. Filtervorrichtung nach einem der vorangehenden Ansprüche, **dadurch gekennzeichnet, dass** der Einlass der Flüssigkeit zum Einlassbereich (1) mittels eines Einspeisungsverteilers erfolgt.

4. Filtervorrichtung nach einem der vorangehenden Ansprüche, **dadurch gekennzeichnet, dass** das Filtersystem (4) Filter umfasst, welche mittels einer Platte gebildet sind, in die Löcher eingebracht sind, wobei die Stirnseiten der Löcher relativ zur Längsachse des Filters geneigt sind und/oder die Wandungen der Löcher relativ zur Orthogonalen der Längsachse des Filters geneigt sind, wobei diese Neigung insbesondere größer als 10°, bevorzugt größer als 30° ist.

5. Filtervorrichtung nach einem der vorangehenden Ansprüche, **dadurch gekennzeichnet, dass** ein Filtersystem (4) mit mindestens drei Filtern um einen zentralen Filter angeordnet sind, oder dass das Filtersystem (4) dermaßen in einem Rohr angeordnet ist, dass, relativ zur Strömungsrichtung der Flüssigkeit, hinter dem Filtersystem das Rohr in zwei Flüssigkeitsabflüsse unterteilt ist oder ein Flüssigkeitsabfluss (3) vor dem Rohr abzweigt und einer weiter im Rohr verläuft, wobei einer dieser Flüssigkeitsabflüsse (3) direkt mit dem Einlassbereich (1) verbunden ist und ein anderer erst nach Durchgang durch das Filtersystem (4) erreicht wird, oder dass das Filtersystem (4) die Form einer Spirale hat und die Filtervorrichtung dermaßen ausgeformt ist, dass die hindurchlaufende Flüssigkeit an einer Wandung dieser Spirale bis zu einem Flüssigkeitsabfluss (3) fließt und die durch das Filtersystem (4) hindurchgegangene Flüssigkeit durch einen anderen Flüssigkeitsabfluss (3) abfließt.

6. Filtervorrichtung nach einem der vorangehenden Ansprüche, **dadurch gekennzeichnet, dass** die Filtervorrichtung ein Bewegungssystem umfasst, welches dazu ausgelegt ist, Filter des Filtersystems (4) zu bewegen, wobei dieses Bewegungssystem insbesondere ein Fördersystem umfasst, welches dazu ausgelegt ist, den Filter in einer Richtung zu bewegen, so dass bereits verwendete Teile des Filters aus dem Flüssigkeitsstrom entnommen werden und nicht verwendete Teile des Filters in den Flüssigkeitsstrom hineinbewegt werden, und/oder wobei das Bewegungssystem ein Vibrationssystem umfasst, welches dazu ausgelegt ist, mindestens einen Filter mit einer Frequenz von > 1 Hz hin- und herzubewegen und/oder dass das Bewegungssystem ein Rotationssystem umfasst, welches dazu ausgelegt ist, mindestens zwei Filter relativ zueinander zu drehen.

7. Filtervorrichtung nach einem der vorangehenden Ansprüche, **dadurch gekennzeichnet, dass** die Filtervorrichtung ein Temperiersystem umfasst, welches dazu ausgelegt ist, mindestens einen Filter zu erwärmen, wobei die Temperatur vorzugsweise so gewählt wird, dass die innere Viskosität von Verunreinigungen, welche auf diese Temperatur erwärmt werden nicht oder zumindest nicht in gleichem Maße herabgesetzt wird, wie die Viskosität der Flüssigkeit.

8. Filtervorrichtung nach einem der vorangehenden Ansprüche, **dadurch gekennzeichnet, dass** die Vorrichtung ein Sensorsystem umfasst, welches dazu ausgelegt ist, an zumindest einem Teil der Restflüssigkeit einen Druckfiltertest durchzuführen und zusätzlich den Fluss der initialen Flüssigkeit zu bestimmen, wobei die Vorrichtung bevorzugt zusätzlich dazu ausgelegt ist, zu bestimmen, in welchem Maße eine Konzentrationssteigerung von Verunreinigungen in der Restflüssigkeit verglichen mit der initialen Flüssigkeit stattgefunden hat, und wobei das Sensorsystem insbesondere zusätzlich dazu ausgelegt ist, den auf das Filtersystem wirkenden Druck zu bestimmen und/oder das Sensorsystem zusätzlich dazu ausgelegt ist, den Fluss der Restflüssigkeit und/oder den Fluss des Filtrats zu bestimmen.

9. Filtervorrichtung nach einem der vorangehenden Ansprüche, **dadurch gekennzeichnet, dass** die Filtervorrichtung als Bandfilter ausgestaltet ist und das Filtersystem (4) ein Filterband umfasst.

10. Filtervorrichtung nach einem der vorangehenden Ansprüche, **dadurch gekennzeichnet, dass** die Filtervorrichtung zusätzlich eine Ausführeinheit umfasst, die aktiv Schmelze aus dem Innenraum durch den Primärschmelze-Abfluss leitet, wobei sich der Wirkungsbereich der Ausführeinheit bevorzugt über die gesamte Breite der Filterposition erstreckt und die Ausführeinheit bevorzugt Elemente der Gruppe Förderschnecken, Saugvorrichtungen, Pressen, Schieber und Spüldüsen umfasst.

11. Filtervorrichtung nach einem der vorangehenden Ansprüche, **dadurch gekennzeichnet, dass** die Filtervorrichtung ein Reinigungssystem für das Filtersystem (4) umfasst, insbesondere außerhalb des Innenraumes an der Austrittsstelle des Filterbandes oder Innerhalb des Innenraumes, wobei das Reinigungssystem bevorzugt ein Reinigungselement oder zwei oder mehr Reinigungselemente umfasst, insbesondere Elemente der Gruppe Schaber, Brenner, Walzen und Schnecken, die das Filtersystem reinigen, wobei die Filtervorrichtung insbesondere ein Filterband in Form eines Endlosbandes umfasst, und wobei die Filtervorrichtung bevorzugt zusätzlich zu einer Ausführeinheit einen Abstreifer oder eine Reinigungswalze als Reinigungselement im Innenraum aufweist, welches so angeordnet ist, dass es das Filterband aktiv reinigt und dabei die Verunreinigungen zumindest teilweise in Richtung der Ausführeinheit schiebt.

12. Filtervorrichtung nach einem der vorangehenden Ansprüche, **dadurch gekennzeichnet, dass** die Filtervorrichtung eine Schnecke umfasst, wobei diese insbesondere so gestaltet ist, dass sie im Bereich des Filtersystems (4) steilere Gänge aufweist als in dem Bereich, in dem sie austrägt, wobei der Primärschmelzeabfluss mit der Ausführeinheit bevorzugt senkrecht zum Filterbahn angeordnet ist und die Schnecke bevorzugt so geformt ist, dass sie zur Ausfuhr von Material in oder gegen die Siebrichtung läuft und insbesondere mit unterschiedlichen Reingungsstegen, Bürsten oder Noppen ausgerüstet ist, und/oder dass sich der Wirkungsbereich der Ausführeinheit insbesondere über die gesamte Breite des Filtersystems (4) erstreckt, so dass ein Filterband über seine gesamte Breite von Verunreinigungen befreit werden kann.

13. Filterverfahren zum Filtern von viskosen Flüssigkeiten, umfassend die Schritte:
- Anströmen der viskosen Flüssigkeit an eine Filtervorrichtung nach einem der Ansprüche 1 bis 12, wobei der durch den Fluss der Flüssigkeit auf die Fläche des Filters ausgeübte Druck P(F) kleiner ist als der Druck des Flusses dieser Flüssigkeit auf eine Fläche orthogonal zur Strömungsrichtung der Flüssigkeit P(S),
- Abführen der durch das Filtersystem (4) hindurchgetretenen Flüssigkeit,
- Ab- oder Rückführen der nicht durch das Filtersystem (4) hindurchgetretenen Flüssigkeit.

14. Filterverfahren nach Anspruch 13, **dadurch gekennzeichnet, dass**
- die viskose Flüssigkeit mit Zusätzen vermischt wird, welche die Viskosität vermindern oder erhöhen, wobei eine Zugabe von Monomeren bevorzugt ist, und/oder
- zur Reinigung des Filters die Flüssigkeit selber verwendet wird, wobei insbesondere der Druck zwischen Einlasssystem uns Auslasssystem gemessen wird und/oder eine visuelle Überprüfung des Verschmutzungsgrades des Filtersystems (4) durchgeführt wird und Viskosität und/oder Fließgeschwindigkeit der Flüssigkeit danach so eingestellt wird, dass diese Verunreinigungen mit der Flüssigkeit, welche nicht durch den Filter gedrungen ist, mitgenommen werden, und/oder
- der Teil der Flüssigkeit, welcher durch den Flüssigkeitsabfluss des Einlassraums (1) austritt, ausgesondert wird oder durch einen weiteren Filter gefiltert wird.

## Claims

1. A filter device comprising an inlet chamber (1), an outlet chamber (2), and a filter system (4), which separates the inlet chamber (1) and the outlet chamber (2), wherein the inlet chamber (1) comprises at least one liquid supply line and at least one liquid drainage (3), and the outlet chamber (2) comprises no liquid supply line and at least one liquid drainage (3), wherein the base of the inlet chamber (1) is at least partially formed by the filter system (4), **characterized in that** the liquid supply line is mounted centrally above the filter system (4) or on the side of the inlet chamber (1), and above the filter system (4) flow elements are mounted, which are designed such that a flow may take place below or above them and have a spiral or serpentine shape and control the flow of the liquid, so that it does not flow directly to the liquid drainage (3) of the inlet chamber (1).

2. The filter device according to claim 1, **characterized in that** the filter system (4) is arranged such that the flow direction of the liquid relative to the surface normal of the filter extends at an angle of between 10° and 90°, in particular between 30° and 70°.

3. The filter device according to one of the preceding claims, **characterized in that** the inlet of the liquid to the inlet region (1) takes place by means of a feed dispenser.

4. The filter device according to one of the preceding claims, **characterized in that** the filter device (4) comprises filters, which are formed by means of a plate, in which holes are formed, wherein the end faces of the holes are inclined relative to the longitudinal axis of the filter and/or the walls of the holes are inclined relative to the orthogonal of the longitudinal axis of the filter, wherein this inclination is in particular greater than 10°, preferably greater than 30°.

5. The filter device according to one of the preceding claims, **characterized in that** a filter system (4) with at least three filters is arranged around a central filter, or that the filter system (4) is arranged in a pipe such that, relative to the flow direction of the liquid, the pipe is divided into two liquid drainages behind the filter system, or one liquid drainage (3) branches off in front of the pipe and one extends further in the pipe, wherein one of said liquid drainages (3) is connected directly to the inlet region (1) and another one is reached only after passing through the filter system (4), or that the filter system (4) has the shape of a spiral and the filter device is formed such that the liquid passing through flows on a wall of said spiral up to a liquid drainage (3) and the liquid which has passed through the filter system (4) is discharged through a different liquid drainage (3).

6. The filter device according to one of the preceding claims, **characterized in that** the filter device comprises a movement system, which is configured to move filters of the filter system (4), wherein said movement system in particular comprises a conveying system, which is configured to move the filter in a direction, so that parts of the filter already used are removed from the liquid flow and parts of the filter not used are moved into the liquid flow, and/or wherein the movement system comprises a vibration system, which is configured to move at least one filter back and forth at a frequency of > 1 Hz, and/or that the movement system comprises a rotation system, which is configured to rotate at least two filters relative to one another.

7. The filter device according to one of the preceding claims, **characterized in that** the filter device comprises a temperature control system, which is configured to heat at least one filter, wherein the temperature is preferably selected such that the inner viscosity of contaminates, which are heated to this temperature, is not reduced or at least not reduced to the same extent as the viscosity of the liquid.

8. The filter device according to one of the preceding claims, **characterized in that** the device comprises a sensor system, which is configured to carry out a pressure filter test on at least a part of the remaining liquid and to additionally determine the flow of the initial liquid, wherein preferably, the device is additionally configured to determine to what extent a concentration increase of contaminates in the remaining liquid as compared to the initial liquid has taken place, and wherein the sensor system is in particular additionally configured to determine the pressure acting on the filter system and/or the sensor system is additionally configured to determine the flow of the remaining liquid and/or the flow of the filtrate.

9. The filter device according to one of the preceding claims, **characterized in that** the filter device is designed as a belt filter, and the filter system (4) comprises a filter belt.

10. The filter device according to one of the preceding claims, **characterized in that** the filter device additionally comprises a discharge unit, which actively leads melt out of the interior through the primary melt drainage, wherein the effective range of the discharge unit preferably extends across the entire width of the filter position, and the discharge unit preferably comprises elements of the group comprising screw-conveyors, suction devices, presses, slides, and flushing nozzles.

11. The filter device according to one of the preceding claims, **characterized in that** the filter device comprises a cleaning system for the filter system (4), in particular outside of the interior at the exit point of the filter belt or inside the interior, wherein the cleaning system preferably comprises one cleaning element or two or more cleaning elements, in particular elements of the group comprising scrapers, burners, rollers, and screws, which clean the filter system, wherein the filter device comprises in particular a filter belt in the form of an endless belt, and wherein the filter device preferably has a wiper or a cleaning roller as a cleaning element in the interior in addition to a discharge unit, which cleaning element is arranged such that it actively cleans the filter belt and in doing so, pushes the contaminates at least partially in the direction of the discharge unit.

12. The filter device according to one of the preceding claims, **characterized in that** the filter device comprises a screw, wherein said screw is particularly designed such that it has steeper passageways in the region of the filter system (4) than in the region, in which it discharges, wherein the primary melt drainage with the discharge unit is preferably arranged perpendicularly to the filter web, and the screw is preferably formed such that for discharging material, it runs in or against the screening direction and in particular is equipped with different cleaning crosspieces, brushes, or knobs, and/or that the effective region of the discharge unit in particular extends across the entire width of the filter system (4), such that a filter belt can be relieved of contaminates across its entire width.

13. A filtering method for filtering viscous liquids, comprising the steps:
- flowing the viscous liquid against a filter device according to one of claims 1 to 12, wherein the pressure P(F) exerted on the surface of the filter by the flow of the liquid is smaller than the pressure of the flow of said liquid on a surface orthogonal to the flow direction of the liquid P(S),
- discharging the liquid which has passed through the filter system (4),
- discharging or returning the liquid which has not passed through the filter system (4).

14. The filtering method according to claim 13, **characterized in that**
- the viscous liquid is mixed with additives, which reduce or increase the viscosity, wherein an addition of monomers is preferred, and/or
- for cleaning the filter, the liquid itself is used, wherein in particular the pressure between the inlet system and the outlet system is measured and/or a visual check of the contamination level of the filter system (4) is carried out and the viscosity and/or flow rate of the liquid are subsequently adjusted such that these contaminations are taken along with the liquid which has not passed through the filter, and/or
- the part of the liquid which exits through the liquid drainage of the inlet chamber (1) is discarded or filtered by a further filter.

## Revendications

1. Dispositif de filtration comprenant une chambre d'entrée (1), une chambre de sortie (2) et un système de filtration (4), qui sépare la chambre d'entrée (1) et la chambre de sortie (2), dans lequel la chambre d'entrée (1) comprend au moins une alimentation de liquide et au moins une évacuation de liquide (3) et la chambre de sortie (2) ne comprend aucune alimentation de liquide et au moins une évacuation de liquide (3), dans lequel le fond de la chambre d'entrée (1) est constitué au moins partiellement du système de filtration (4), **caractérisé en ce que** l'alimentation de liquide est montée de manière centrale au-dessus du système de filtration (4) ou sur le côté de la chambre d'entrée (1) et, au-dessus du système de filtration (4), sont montés des éléments d'écoulement qui sont conçus de façon à ce qu'un écoulement peut avoir lieu en dessous ou au-dessus de ceux-ci et présentent une forme de spirale ou de serpentin et régulent l'écoulement du liquide de façon à ce qu'il ne s'écoule pas sur une trajectoire directe vers la sortie de liquide (3) de la chambre d'entrée (1).

2. Dispositif de filtration selon la revendication 1, **caractérisé en ce que** le système de filtration (4) est disposé de façon à ce que la direction d'écoulement du liquide par rapport à la normale de la surface du filtre s'étend avec un angle entre 10° et 90°, plus particulièrement entre 30° et 70°.

3. Dispositif de filtration selon l'une des revendications précédentes, **caractérisé en ce que** l'entrée du liquide a lieu vers la zone d'entrée (1) au moyen d'un répartiteur d'alimentation.

4. Dispositif de filtration selon l'une des revendications précédentes, **caractérisé en ce que** le système de filtration (4) comprend des filtres qui sont formés d'une plaque dans laquelle des trous sont réalisés, dans lequel les faces frontales des trous sont inclinées par rapport à l'axe longitudinal du filtre et/ou les parois des trous sont inclinées par rapport à l'orthogonale de l'axe longitudinal du filtre, dans lequel cette inclinaison est plus particulièrement supérieure à 10°, de préférence supérieure à 30°.

5. Dispositif de filtration selon l'une des revendications précédentes, **caractérisé en ce qu'**un système de filtration (4) avec au moins trois filtres qui sont disposés autour d'un filtre central ou **en ce que** le système de filtration (4) est disposé dans un tube, de façon à ce que, par rapport à la direction d'écoulement du liquide, derrière le système de filtration, le tube est divisé en deux évacuations de liquide ou une évacuation de liquide (3) bifurque avant le tube et une autre continue dans le tube, dans lequel une de ces évacuations de liquide (3) est reliée directement avec la zone d'entrée (1) et une autre n'est atteinte qu'après un passage à travers le système de filtration (4), ou **en ce que** le système de filtration (4) présente la forme d'une spirale et le dispositif de filtration est formé de façon à ce que le liquide qui le traverse s'écoule le long d'une paroi de cette spirale jusqu'à une évacuation de liquide (3) et le liquide ayant traversé le système de filtration (4) s'écoule à travers une autre évacuation de liquide (3).

6. Dispositif de filtration selon l'une des revendications précédentes, **caractérisé en ce que** le dispositif de filtration comprend un système de déplacement qui est conçu pour déplacer les filtres du système de filtration (4), dans lequel ce système de déplacement comprend plus particulièrement un système de convoyage qui est conçu pour déplacer le filtre dans une direction, de façon à ce que des parties déjà utilisées du filtre soient retirées du flux de liquide et les parties non utilisées du filtre sont déplacées vers l'intérieur du flux de liquide et/ou dans lequel le système de déplacement comprend un système de vibration qui est conçu pour déplacer un filtre avec une fréquence > 1 Hz avec un mouvement de va-et-vient et/ou **en ce que** le système de déplacement comprend un système de rotation qui est conçu pour faire tourner au moins deux filtres l'un par rapport à l'autre.

7. Dispositif de filtration selon l'une des revendications précédentes, **caractérisé en ce que** le dispositif de filtration comprend un système de régulation de température qui est conçu pour chauffer au moins un filtre, dans lequel la température est choisie de préférence de façon à ce que la viscosité interne des impuretés qui sont chauffées à cette température ne soit pas diminuée ou diminuée au moins dans la même mesure que la viscosité du liquide.

8. Dispositif de filtration selon l'une des revendications précédentes, **caractérisé en ce que** le dispositif comprend un système de capteur qui est conçu pour effectuer, sur au moins une partie du liquide restant, un test de filtre sous pression et pour déterminer en outre le débit du liquide initial, dans lequel le dispositif est, en outre, de préférence conçu pour déterminer dans quelle mesure une augmentation de concentration des impuretés dans le liquide restant a lieu par rapport au liquide initial et dans lequel le système de capteur est, en outre, de préférence conçu pour déterminer la pression agissant sur le système de filtration et/ou le système de capteur est en outre conçu pour déterminer le débit du liquide restant et/ou le débit du filtrat.

9. Dispositif de filtration selon l'une des revendications précédentes, **caractérisé en ce que** le dispositif de filtration est conçu comme un filtre à bande et le système de filtration (4) comprend une bande filtrante.

10. Dispositif de filtration selon l'une des revendications précédentes, **caractérisé en ce que** le dispositif de filtration comprend en outre une unité d'évacuation qui conduit activement une fonte à partir de l'espace interne à travers l'évacuation de fonte primaire, dans lequel la zone d'action de l'unité d'évacuation s'étend de préférence sur toute la largeur de la position du filtre et l'unité d'évacuation comprend de préférence des éléments du groupe : vis sans fin, dispositifs d'aspiration, presses, curseurs et buses de rinçage.

11. Dispositif de filtration selon l'une des revendications précédentes, **caractérisé en ce que** le dispositif de filtration comprend un système de nettoyage pour le système de filtration (4), plus particulièrement à l'extérieur de l'espace interne au niveau de l'endroit de sortie de la bande de filtre ou à l'intérieur de l'espace interne, dans lequel le système de nettoyage comprend de préférence un élément de nettoyage ou deux éléments de nettoyage ou plus, plus particulièrement des éléments du groupe : racleurs, brûleurs, rouleaux et vis sans fin, qui nettoient le système de filtration, dans lequel le dispositif de filtration comprend de préférence, en plus d'une unité d'évacuation, un racleur ou un rouleau de nettoyage en tant qu'élément de nettoyage dans l'espace interne, qui est disposé de façon à nettoyer activement la bande de filtre et à pousser ainsi les impuretés au moins partiellement en direction de l'unité d'évacuation.

12. Dispositif de filtration selon l'une des revendications précédentes, **caractérisé en ce que** le dispositif de filtration comprend une vis sans fin, dans lequel celle-ci est conçue plus particulièrement de façon à présenter, au niveau du système de filtration (4), des pas plus grands que dans la zone dans laquelle elle évacue, dans lequel l'évacuation de fonte primaire avec l'unité d'évacuation est disposée de préférence perpendiculairement à la bande de filtre et la vis sans fin est de préférence formée de façon à s'étendre, pour l'évacuation de matériau, dans ou contre la direction de tamisage et est munie plus particulièrement de nervures de nettoyage, de brosses ou de protubérances ,et/ou **en ce que** la zone d'action de l'unité d'évacuation s'étend plus particulièrement sur toute la largeur du système de filtration (4) de façon à ce qu'une bande de filtre puisse être libérée des impuretés sur toute sa largeur.

13. Procédé de filtration pour le filtrage de liquides visqueux, comprenant les étapes suivantes :
- écoulement du liquide visqueux dans un dispositif de filtration selon l'une des revendications 1 à 12, dans lequel la pression P(F) exercée par le flux de liquide sur la surface du filtre est inférieure à la pression du flux de ce liquide sur une surface orthogonale à la direction d'écoulement du liquide P(S),
- évacuation du liquide ayant traversé le système de filtration (4),
- évacuation ou retour du liquide n'ayant pas traversé le système de filtration (4).

14. Procédé de filtration selon la revendication 13, **caractérisé en ce que**
- le liquide visqueux est mélangé avec des additifs qui diminuent ou augmentent la viscosité, dans lequel un ajout de monomères est préféré et/ou
- pour le nettoyage du filtre, le liquide lui-même est utilisé, dans lequel, plus particulièrement, la pression entre le système d'entrée et le système de sortie est mesurée et/ou un contrôle visuel du degré d'encrassement du système de filtration (4) est effectué et la viscosité et/ou la vitesse d'écoulement du liquide est ajustée ensuite de façon à ce que ces impuretés soient entraînées avec le liquide qui n'a pas traversé le filtre et/ou
- la partie du liquide qui sort à travers l'évacuation de liquide de la chambre d'entrée (1) est éliminée ou filtrée à travers un autre filtre.
